(19) **Europäisches Patentamt / European Patent Office / Office européen des brevets**

(11) **EP 4 764 789 A1**

(12) **EUROPEAN PATENT APPLICATION**

(43) Date of publication:
24.06.2026 Bulletin 2026/26

(51) International Patent Classification (IPC):
*G06F 3/01* (2006.01)    *A63F 13/25* (2014.01)
*A63F 13/285* (2014.01)

(21) Application number: 24223041.5

(22) Date of filing: 23.12.2024

(52) Cooperative Patent Classification (CPC):
**G06F 3/016; A63F 13/285; G06F 3/011;**
G06F 2203/013

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: WYVRN
59800 Lille (FR)

(72) Inventors:
• **VEZZOLI, Eric**
**59000 LILLE (FR)**
• **HULSKEN, Alexandre**
**59000 LILLE (FR)**

(74) Representative: **RVDB**
**87, rue Nationale**
**59000 Lille (FR)**

(54) **METHOD AND APPARATUS OF GENERATING HAPTIC EFFECT FROM A PLURALITY OF SOURCE CONTENTS**

(57) There are provided methods and apparatus of generating haptic data representative of a haptic effect. To reach that aim, source data representative of a set of source contents (101, 102, 103) comprising a first subset of one or more source contents of audio type (101) and a second sub-set of one or more source contents of haptic type (102, 103) is received. At least a source content is selected in the set of source contents (101, 102, 103) based on a set of selection parameters. The haptic data is generated according to the source data representative of the at least one selected source content.

**Fig. 1**

**Description**

FIELD

The present application generally relates to the field of haptic and, in particular, to the generating of haptic data representative of a haptic effect to be rendered by one or more haptic devices. The present application also relates to method and apparatus of processing data representative of a plurality of source contents including an audio content to generate data representative of one or more haptic effects.

BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

Haptic technology broadly refers to any technology recreating the sense of touch in a user interface by applying force, vibration, motion and other feelings such as temperature, to provide information to an end user, for example in addition to visual and audio information when rendering multimedia contents.

Haptic feedback covers a wide range of possible stimulation embodiments but is mainly divided into tactile haptic technology and kinesthetic haptic technology: tactile haptic feedback (or tactile haptic effect) refers to sensations such as vibration, friction, or micro-deformation while kinesthetic haptic feedback (or kinesthetic haptic effect) refers to sensations that provide force sensations that can stimulate both mechanical stimuli as well as stimuli related to the position and the movement of the body.

The rendering of haptic feedback or haptic effect is obtained using haptic device (also called haptic rendering device), a haptic device corresponding to an arrangement of one or more haptic actuators. For example, vibrotactile effects might be obtained with the use of haptic devices such as ERMs (Eccentric Rotating Mass), LRAs (Linear Resonant Actuators), and large bandwidth actuators like VCM (Voice Coil Motors), PZT (Piezoelectric Actuators) or SMA (Shape Memory Alloy). Kinesthetic effects might be rendered with actuators exercising a force impeding a limb movement, such effects being merely felt on the muscles and tendons than on the skin. Other examples of haptic devices comprise resistive force feedback devices, active force feedback devices and skin indentation devices.

While there is a large range of haptic devices enabling to experience haptic effects, contents, e.g., audio and/or video content, comprising haptic effects to be rendered are quite limited. The lack of haptic content limits the interest in haptic devices and limits user experience while consuming the contents.

SUMMARY

The following section presents a simplified summary of at least one exemplary embodiment in order to provide a basic understanding of some aspects of the present application. This summary is not an extensive overview of an exemplary embodiment. It is not intended to identify key or critical elements of an embodiment. The following summary merely presents some aspects of at least one of the exemplary embodiments in a simplified form as a prelude to the more detailed description provided elsewhere in the document.

According to a first aspect of the present application, there is provided a method haptic data representative of a haptic effect, the method comprising:

- receiving source data representative of each source content of a set of source contents comprising a first sub-set of one or more source contents of audio type and a second sub-set of one or more source contents of haptic type;
- selecting at least a source content in said set of source contents based on a set of selection parameters comprising at least a selection parameter;
- generating the haptic data according to the source data representative of the at least a selected source content.

In an exemplary embodiment, only at least a source content of the audio type or only at least a source content of the haptic type is selected.

In an exemplary embodiment, the method further comprises:

- receiving mode information representative of a rendering mode for rendering the haptic effect;
- selecting the set of user-preference parameters among a plurality of sets of user-preference parameters according to the mode information.

In a further exemplary embodiment, values of the detection parameters of the selected set are according to the set of user-preference parameters.

In another exemplary embodiment, a single source content is selected in the set of source contents based on the set of selection parameters.

In a further exemplary embodiment, one selection parameter of the set of selection parameters is associated with each source content of the set of source contents, the selection parameter associated with the single selected source content being equal to 1, the other selection parameters of the set of selection parameters being each equal to 0.

In an additional exemplary embodiment, a plurality of source contents is selected, the haptic data being generated by mixing the source data representative of the plurality of selected source contents.

In another exemplary embodiment, the mixing comprises applying a determined weighting factor to the source data representative of each selected source content of the plurality of selected source contents, the determined weighting factors being according to the set of selection parameters.

In an exemplary embodiment, values assigned to the selection parameters of the set of selection parameters are adjustable via a user interface.

In a further exemplary embodiment, the set of selection parameters is according to a multidimensional content representative of scenes to be rendered on a display device.

In another exemplary embodiment, the multidimensional content corresponds to a video game content.

In a further exemplary embodiment, the set of selection parameters is selected in a list of sets of selection parameters, each set of selection parameters of the list of sets of selection parameters being mapped to a different multidimensional content.

In another exemplary embodiment, the source data of each source content of the second sub-set of one or more source contents of haptic type comprises haptic effect data descriptive of at least a determined haptic effect and body mapping data descriptive of one or more body parts of a body model targeted by the at least a determined haptic effect.

According to a second aspect of the present application, there is provided an apparatus of generating haptic data representative of a haptic effect, wherein the apparatus comprises a memory associated with at least a processor configured to implement the method in accordance with the first aspect of the present application.

According to a third aspect of the present application, there is provided a computer program product including instructions which, when the program is executed by one or more processors, causes the one or more processors to carry out a method according to the first aspect of the present application.

According to a fourth aspect of the present application, there is provided a non-transitory storage medium carrying instructions of program code for executing a method according to the first aspect of the present application.

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

Figure 1 shows an example of a generation scheme of haptic data from one or more source contents, in accordance with at least one exemplary embodiment;

Figure 2 shows a schematic block diagram of step(s) of a method of generating haptic data from one or more source contents, in accordance with at least one exemplary embodiment;

Figure 3 illustrates a schematic block diagram of an example of a system in which various aspects and exemplary embodiments are implemented.

Similar reference numerals may have been used in different figures to denote similar components.

DESCRIPTION OF EXEMPLARY EMBODIMENTS

At least one of the exemplary embodiments is described more fully hereinafter with reference to the accompanying figures, in which examples of at least one of the exemplary embodiments are illustrated. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the spirit and scope of the present application.

Exemplary embodiments described hereinafter may be combined with each other or each of the exemplary embodiment may be individually implemented, e.g., as an alternative embodiment.

At least one of the aspects generally relates to a method and apparatus of generating haptic data representative of haptic effect(s) from source data descriptive of one or more source contents that have been selected in a set of source contents, called selected source content(s), according to a set of selection parameters. The set of source contents comprises at least one source content of the audio type (also called audio source content) and at least one source content of the haptic type (also called haptic source content). The selected source content(s) comprises at least one audio source content and/or at least one haptic source content. The haptic data may therefore be obtained from source data representative of a single source content or from source data representative of a plurality of source contents, i.e., by mixing the source data of the plurality of source contents.

The haptic data is intended to be used to control one or more haptic devices to render the haptic effect(s). The one or more haptic devices each comprise one or more haptic actuators, e.g., LRA(s), VCM(s), ERM, PZT and/or SMA.

Such a processing enables to generate haptic data from one or various source contents, e.g., by selecting, and potentially mixing, the source content(s) (of the audio type and/or haptic type), which is/are the most appropriate for a multidimensional content that is consumed by a user (e.g., a video game) and/or to the wishes of the user.

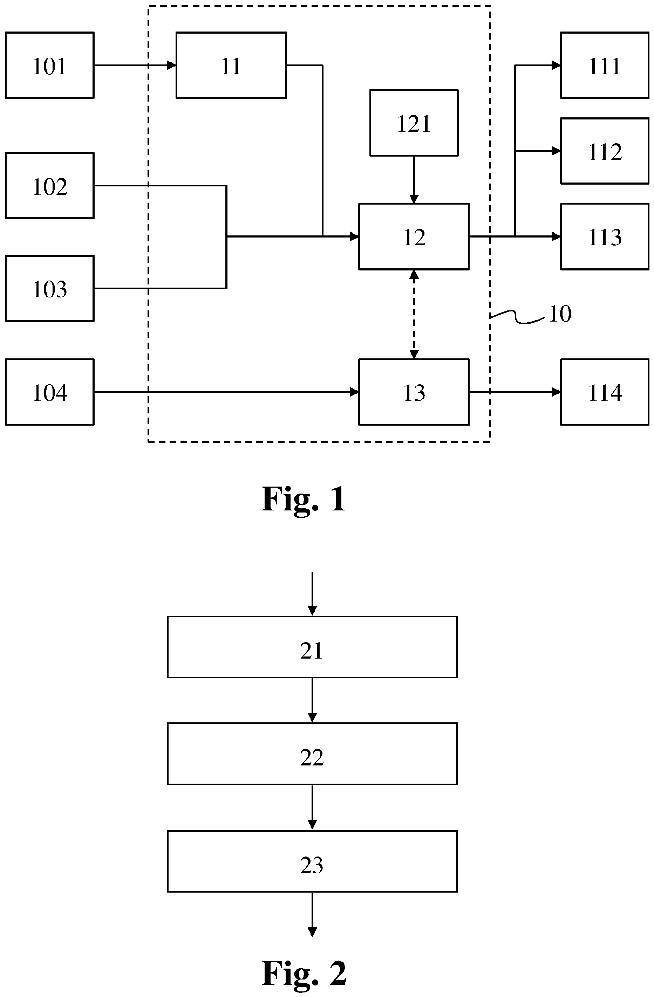

**Figure 1** illustrates a schematic representation of a generation scheme of haptic data descriptive of one or more haptic effects from one or more source contents 101 to 103 in accordance with at least one exemplary embodiment.

Blocks 11, 12 and 13 represent indifferently operations/steps of a process/method and processing units implementing such operations/steps of the process/method. The processing units may be implemented as a single element or as separate elements as a combination of hardware and software as known to those skilled in the art.

At block 11, source data representative or descriptive of a source content of the audio type, also called audio source content 101, is received. The source data representative of the audio source content 101 is called audio source data hereinafter. The audio source data is received by an element or unit, represented by block 11, configured to process the audio source data to determine and obtain audio-haptic data (i.e., haptic data obtained from audio data) adapted to control one or more haptic devices 111, 112 and 113. The element represented by block 11 is called audio-to-haptic converter hereinafter.

The audio source content 101 may be part of a first sub-set of one or more source contents of audio type (i.e., a first sub-set of one or more audio source contents) in a set of source contents. Even if described with reference to a single audio source content 101 and associated audio source data, the following applies to each audio source content of a plurality of audio source contents comprised in the first sub-set, when applicable.

The audio source data is received in analog or digital format, for example in the form of an analog or digital signal carrying the audio source data. When received in analog format, the audio-to-haptic converter converts the analog data into digital data for further processing.

The audio source data may be represented in time space and/or in frequency space. The audio source data may be converted in block 11 from a time space representation to a frequency space representation, e.g., using FFT (Fast-Fourier Transform) or inversely from a frequency space representation to a time space representation, e.g., using an inverse FFT, as it will be recognized by the skilled person in the art.

The audio source data is for example represented with a series of samples. A sample in a time space representation is represented with a value of amplitude associated with a time. A sample in a time space representation is represented with data representative of amplitude associated with a frequency (or a frequency range). The audio source data represented with a series of samples results for example from a sampling process at a determined sampling rate or frequency (e.g., 44100 Hz).

The audio-to-haptic converter is configured to process the audio source data, notably for generating audio-haptic data representative of one or more haptic effects from the audio source data (or a part of the audio source data). Processing performed by the audio to haptic converter may for example comprise analog/digital converting, frequency filtering (e.g., low-pass filtering, band-pass filtering), temporal filtering (e.g., selecting a time window), down sampling, transforming from time space to frequency space, transforming from frequency space to time space, decoding (the audio source data being for example encoding in a format such as for example AAC, AC-4, ALS, MP3, WAV, FLAC, DTS, Vorbis, Opus, Windows Media Audio), demultiplexing, etc.

The audio source content 101 may be associated and received with a multidimensional content 104 representative of scenes to be rendered on a display device 114. The multidimensional content 104 is representative of two-dimensional (2D) or three-dimensional (3D) scenes and may correspond to a video content such as a movie or a video game. For example, the audio source content 101 corresponds to the audio content of a movie, a video game or a VR (Virtual Reality) content.

The data representative or descriptive of the multidimensional content 104 may correspond to data descriptive of CGI virtual scenes, e.g., when the multidimensional content 104 corresponds to a video game content, or data descriptive of a real scene acquired with camera(s), e.g., when the multidimensional content 104 corresponds to a movie for example.

The audio source content 101 is intended to be rendered by one or more audio rendering devices while rendering the multidimensional content 104 on the display device 14, the rendering of both contents being timely synchronized.

Examples of the audio rendering device(s) comprise a headset, XR headset, headphones, loudspeakers, etc.

The processing of the audio source data to generate the audio-haptic data may comprise detecting and determining the presence of specific components or characteristics in the audio source data, such as:

- one or more transients, a transient being represented with a sudden change or variation in the audio source data or signal, a transient corresponding for example to a part of the audio source data or signal with an abrupt change in the amplitude (e.g., an amplitude peak or a series of amplitude peaks); and/or
- time-varying amplitude in the source data or signal; and/or
- one or more frequency components/parts of the audio source data or signal each corresponding to a frequency sub-band of the frequency band associated with the audio source data or signal (e.g., a part of the audio source data or signal with frequencies lower than a determined frequency cutoff or with frequencies belonging to a determined interval or band of frequencies).

The presence of specific components or characteristics in the audio source data may be detected using detection parameters stored in a memory of the audio-to-haptic converter. The detection parameters are for example selected in a list of detection parameters based on the type of the audio source content 101 (e.g., voice, music, silence, explosion, dialogue, firearm noise, etc.) or based on user-preferences.

The audio-haptic data is for example generated by feeding one or more haptic effect synthesizing models (or rules) with the one or more specific components or characteristics detected in the audio source data.

At block 12, the audio-haptic data generated at block 11 is received, for example stored in a memory or buffer.

Additionally, source data representative or descriptive of one or more source contents of the haptic type, also called haptic source contents 102, 103, is received. The number of haptic source contents is greater or equal to 1, for example equal to 1, 2, 3, 4, 5 or more. According to the non-limiting example of Figure 1, source data representative of two haptic source contents 102, 103 is received.

The haptic source contents 102, 103 may be part of a second sub-set of one or more source contents of haptic type (i.e., a second sub-set of one or more haptic source contents) in the set of source contents also comprising the first sub-set of one or more audio source contents. Even if described with reference to 2 haptic source contents 102, 103 and associated audio source data, the following applies to each haptic source content of the second sub-set comprising a single haptic source content or a plurality of haptic source contents.

The source data representative of each haptic source content 102, 103 is called haptic source data hereinafter. The haptic source data is received by an element or unit, represented by block 12, configured to process the haptic source data and the audio-haptic data to generate haptic data adapted to control the one or more haptic devices 111, 112 and 113. The element represented by block 12 is called haptic mixer hereinafter.

The haptic source data is received in analog or digital format, for example in the form of an analog or digital signal carrying the haptic source data. When received in analog format, the haptic mixer converts the analog data into digital data for further processing.

The haptic source data may be represented in time space and/or in frequency space. The haptic source data may be converted in block 12 from a time space representation to a frequency space representation, e.g., using FFT (Fast-Fourier Transform) or inversely from a frequency space representation to a time space representation, e.g., using an inverse FFT, as it will be recognized by the skilled person in the art.

The haptic source data is for example represented with a series of samples. A sample in a time space representation is represented with a value of amplitude associated with a time. A sample in a time space representation is represented with data representative of amplitude associated with a frequency (or a frequency range). The haptic source data represented with a series of samples results for example from a sampling process at a determined sampling rate or frequency (e.g., 44100 Hz).

The haptic mixer is configured to process the audio-haptic data and the haptic source data for generating haptic data representative of one or more haptic effects from the audio-haptic data (or a part of the audio-haptic data) and/or from the haptic source data (or a part of the haptic source data) of one or more haptic source contents 102, 103. Processing performed by the haptic mixer may for example comprise selecting one or more source contents(s) and associated source data, and when several source contents are selected, mixing the source data of the selected source contents to generate the haptic data.

The haptic mixer may be further configured to perform analog/digital converting, frequency filtering (e.g., low-pass filtering, band-pass filtering), temporal filtering (e.g., selecting a time window), down sampling, transforming from time space to frequency space, transforming from frequency space to time space, etc.

Each haptic source content 102, 103 may be associated and received with the multidimensional content 104.

The haptic source contents 102, 103 are for example representative of the same haptic effects but applied to different body parts of a body model. For example, the haptic source content 102 is descriptive of a determined set of haptic effects to be applied to first and second body parts of a body model, e.g., both hands; and the haptic source content 103 is descriptive of the same determined set of haptic effects to be applied to third and fourth body parts of the body model, e.g., the palm and thumb of both hands.

In a variant, the haptic source contents 102, 103 are representative of the same haptic effects but the body parts targeted by the haptic effects are described differently in the haptic source data descriptive of the haptic source contents 102, 103: the body parts may be identified with respect to a first body model in the haptic source content 102 and with respect to a second body model different from the first body model in the haptic source content 103.

In another example, the haptic source contents 102, 103 are representative of the same haptic effects but with different amplitude: the haptic source data descriptive of the haptic source content 102 is for example representative of haptic effects with a lower amplitude than the amplitude of the haptic effects represented by the haptic source data descriptive of the haptic source content 103. The haptic source content 102 then corresponds to soft haptic effects and the haptic source content 103 corresponds to high haptic effects.

The source data of each haptic source content 102, 103 comprises haptic effect data descriptive of one or more determined haptic effects and body mapping data descriptive of one or more body parts of a body model targeted by the one or more determined haptic effects.

The source data of each source content of the set of source contents comprising the first sub-set of audio source content(s) 101 and the second sub-set of haptic source content(s) 102, 103 and the data descriptive of the multidimensional content 104 may be received in the form of a single data stream or o a plurality of separate data streams, i.e., a single data stream for each source content and a single data stream for the multidimensional content. The source data and the data of the multidimensional content are for example received in the form of a multichannel signal, one different channel of the multichannel signal carrying the source data of a different source content and the data of the multidimensional content.

The source data and the data of the multidimensional content 104 are for example received from a memory of a device 10 comprising the audio-to-haptic converter represented with block 11, the haptic mixer represented with block 12 and a rendering engine represented with block 13 configured to render images of the multidimensional content 104. According to other examples, the source data and the data of the multidimensional content 104 are received from a remote storage device (e.g., a hard drive, USB key) and/or from the cloud via a network corresponding for example to a WAN (Wide Area Network), LAN (Local Area Network) or WLAN (Wireless Local Area Network) network or a combination of one or more of these networks. According to other examples, the network corresponds to a radio broadcasting network, a television broadcasting network, a cellular network (e.g., based on LTE or LTE-Advanced technologies), a satellite network, or any combination thereof.

The rendering engine represented with block 13 is configured to process the data descriptive of the multidimensional content 104 to display images representative of the scenes described by the data of the multidimensional content 104 on a display device 114.

The processing of the data may comprise decoding the data when the data is for example encoded according to a video coding format such as H.264 (MPEG-4 AVC), MOV, Windows Media Video (WMV), FLV, etc., e.g., when the data corresponds to video data and the multidimensional content 104 corresponds to a video content such as a movie.

When the multidimensional content 104 corresponds to a video game content, the processing of the data corresponding to video game data may comprise rendering at run-time images of the scenes to be displayed on the display device 114 according to instructions received from peripheral device(s) connected to the rendering engine represented with block 13. The images are generated, for example, as a function of an avatar's movement in the virtual environment described with the multidimensional content 104, according to commands received from a user controlling the avatar's movement and playing the video game. The generated images correspond to the avatar's point of view in the virtual environment. The rendering comprises implementing methods known to those skilled in the art such as the z-buffer method (also known as z-buffer algorithm).

At block 12, one or more source contents is/are selected in the set of source contents comprising the first sub-set of one or more audio source contents and the second sub-set of one or more haptic source contents. The selection of the one or more source contents is based on a set of selection parameters 121 comprising at least one selection parameter.

The set of selection parameters 121 is for example received from a memory of the haptic mixer or from a memory of the device 10 comprising or implementing the haptic mixer, the set of selection parameters 121 being stored in such memory.

The set of selection parameters 121 is for example according to:

- user-preferences, the value assigned to each selection parameters of the set of selection parameters 121 being set or adjusted via a user interface, e.g., a graphical user interface displayed on the display device 114, the user setting the selection parameter values according to his/her preferences; and/or

- the multidimensional content 104, e.g., according to the type of the multidimensional content 104, i.e., a different set of selection parameters 121 being associated with each type of multidimensional content in a list of types of multidimensional content, or according to the multidimensional content 104 itself, i.e., a different set of selection parameters 121 being associated with each multidimensional content in a list of multidimensional contents each identified with a unique identifier for example.

When the set of selection parameters 121 is dependent on the type of the multidimensional content 104, the type belongs for example to a set of types comprising:

- interactive type, such as video game contents for which the displayed contents and images are interactive and may depend on user's commands received through peripheral devices such as keyboard, mouse, voice, gamepad; and
- non-interactive type, such as movies.

In a variant, the interactive type comprises several types of video games such as:

- first-person shooter (FPS) or first-person perspective video games;
- third-person shooter (TPS) or third-person perspective video games; and
- fixed perspective video games, such as side scrollers or top-down camera perspective video games.

When the set of selection parameters 121 is based on the multidimensional content 104, the set of selection parameters 121 may be selected in a list of different sets of selection parameters according to an information identifying the multidimensional content 104 or the type of the multidimensional content 104.

The information identifying the multidimensional content 104 or the type of the multidimensional content 104 may be received from the rendering engine represented by block 13. The rendering engine may obtain this information from the data representative of the multidimensional content 104 (the information being for example associated with the data stream as metadata). In a variant, the information is determined by the rendering engine by processing and analyzing the data representative of the multidimensional content 104, e.g., by performing semantic analyzing.

The set of selection parameters 121 to be selected according to the information the multidimensional content 104 or the type of the multidimensional content 104 may be identified in a LUT (Look-Up table) mapping identifiers of a list of multidimensional contents (or of a list of types of multidimensional contents) with identifiers of the list of sets of selection parameters. In the LUT, each multidimensional content identifier (or each multidimensional content type identifier) is mapped to a single set of selection parameters (or to an identifier identifying the set of selection parameters).

Various LUTs may be stored in a memory of the haptic mixer or of the device 10, e.g., a LUT mapping the multidimensional content identifiers with the sets of selection parameters (or with the identifiers identifying the sets of selection parameters) and a LUT mapping the multidimensional content type identifiers with the sets of selection parameters (or with the identifiers identifying the sets of selection parameters).

The set of selection parameters 121 comprises for example one selection parameter for each source content of the set of source contents.

Values assignable to each selection parameter may correspond to the integers 0 and 1. A selection parameter with value 1 triggers the selection of the source content associated with the selection parameter. A selection parameter with value 0 triggers the non-selection (or rejection) of the source content associated with the selection parameter.

In a variant, values assignable to each selection parameter may correspond to decimal values comprised between 0 and 1, 0 and 1 included. This variant enables to select one or more source contents and to apply a weighting factor to the source data associated with the selected source content(s) to generate the haptic data, the weighting factor corresponding to the decimal value assigned to the selection parameter for each source content.

Depending on the set of selection parameters 121 that has been selected in the list of sets of selection parameters or set by a user, following embodiments are obtained:

- the selection of every source content of the audio type when only the selection parameters associated with the audio source contents are assigned a value different from 0, e.g., a value equal to 1, the other selection parameters being assigned the value 0;
- the selection of every source content of the haptic type when only the selection parameters associated with the haptic source contents are assigned a value different from 0, e.g., a value equal to 1, the other selection parameters being assigned the value 0;
- the selection of a single source content in the set of source contents when only the selection parameter associated with this single source content is assigned a value different from 0, e.g., a value equal to 1, the other selection parameters being assigned the value 0;
- the selection of a plurality of source contents in the set of source contents, e.g., the audio source content 101 and one or more of the haptic source contents 102, 103 when the selection parameters associated with these selected source contents are assigned a value different from 0, e.g., a value equal to 1, the other selection parameters being assigned the value 0.

Selecting the audio source content 101 means selecting the audio-haptic data obtained from the processing of the audio source data representative of the audio source content 101. In a variant, selecting the audio source content 101 means triggering the processing of the audio source data to obtain the audio-haptic data. According to this variant, the processing of the audio source data starts only when the audio source content 101 is selected, which enables to save resources when the audio source content 101 is not selected.

At block 12, the haptic data is generated according to the source data representative of the one or more selected source contents.

When a single source content has been selected with a selection parameter having a value equal to 1, the haptic data corresponds to the source data of the single selected source content, e.g., the audio-haptic data when the single selected source content corresponds to the audio source content 101 or the source data of the haptic source content 102 or 103 when the single selected source content corresponds to the haptic source content 102 or 103.

When a single source content has been selected with a selection parameter having as value a decimal value less than 1, the haptic data is obtained by applying the decimal value to the source data of the single selected source content. For example, when the source data is representative of amplitude values, a weighting coefficient equal to the decimal value is applied to these amplitude values to obtain the haptic data, which is representative of amplitude values.

The haptic data is obtained via the following equation:

$$A' = x * A \qquad\qquad \text{Equation 1}$$

wherein A' is the haptic data (e.g., an amplitude value of the haptic effect), x is the weighting coefficient, and A is the source data (e.g., the amplitude of the source data).

When a plurality of source contents has been selected, the haptic data is generated by mixing the source data of this plurality of source contents, i.e., combining the various source data.

The mixing may comprise applying a determined weighting factor to the source data representative of each selected source content of the plurality of selected source contents. The weighting factors may correspond to the values assigned to the selection parameters when the selection parameters are assigned decimal values. In a variant, weighting factors are assigned to the set of selection parameters and stored in the memory of the haptic mixer or of the device 10, one weighting factor being associated with each selection parameter of the set of selection parameters.

The mixing may correspond to a weighted average or to a weighted sum of the source data representative of the selected source contents.

The source data of each selected source content is for example synchronized with the other source data before applying the weighted average or the weighted sum. The synchronization may be based on temporal information (e.g., timestamps) associated with the samples forming each source data, this temporal information referring for example to time information associated with the data of the multidimensional content 104 used to synchronize the rendering of the audio source content 101 and the haptic source contents 102, 103, when applicable, with the rendering of the multidimensional content 104.

When 2 source contents are selected, e.g., the audio source content 101 and one of the haptic source contents 102, 103, e.g., the haptic source content 102, the haptic data may be obtained with the following equation:

$$A' = \frac{x_1 * A_1 + x_2 * A_2}{x_1 + x_2} \qquad\qquad \text{Equation 2}$$

Wherein A' is the haptic data (e.g., an amplitude value of the haptic effect), $x_1$ is the weighting factor associated with the audio source content 101, $A_1$ is the audio-haptic data (e.g., the amplitude of the audio-haptic data), $x_2$ is the weighting factor associated with the haptic source content 102, and $A_2$ is the source data of the haptic source content 102 (e.g., the amplitude of the source data of the haptic source content 102) temporally corresponding to $A_1$.

The thus obtained haptic data is transmitted to the haptic actuators to control the haptic actuators and render the haptic effect described by the haptic data.

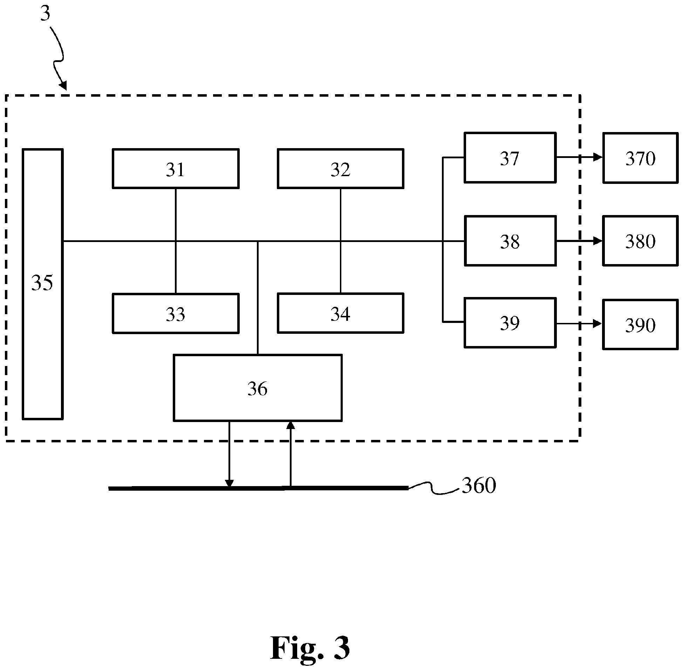

Exemplary embodiments of the audio-to-haptic converter, haptic mixer, rendering engine and/or device 10 are described hereinafter with regard to figure 3.

**Figure 2** shows a schematic block diagram of steps of a method of generating haptic data representative of a haptic effect, in accordance with at least one exemplary embodiment.

In a first step 21, source data representative of each source content of a set of source contents is received, the set of source contents comprising a first sub-set of one or more source contents of audio type and a second sub-set of one or more source contents of haptic type.

In a second step 22, at least a source content is selected in the set of source contents based on a set of selection parameters comprising at least a selection parameter.

In a third step 23, the haptic data is generated according to the source data representative of the at least a selected source content.

**Figure 3** shows a schematic block diagram illustrating an example of an apparatus or system 3 in which various aspects and exemplary embodiments are implemented.

System 3 may be embedded as one or more devices including the various components described below. In various embodiments, system 3 may be configured to implement one or more of the aspects described in the present application.

Examples of equipment that may form all or part of the system 3 include personal computers, laptops, smartphones, tablet computers, digital multimedia set top boxes and their associated processing systems, display devices, light-emitting devices, servers, chroma encoders, chroma decoders, video encoders, video decoders, post-processors processing output from a chroma and/or video decoder, pre-processors providing input to chroma and/or video encoder, web servers, set-top boxes, wireless (e.g., Bluetooth®) connected wearable devices, game controller, mouse, mousepad, keyboard, palm rest, chairs, desk, XR headset, headphones, bracelet, head and/or lumbar support device or chair, any other device for processing chroma (lighting) data or signals, and/or video data or signals, or other communication devices. Elements of system 3, singly or in combination, may be embodied in a single integrated circuit (IC), multiple ICs, and/or discrete components. For example, in at least one embodiment, the processing and encoder/decoder elements of system 3 may be distributed across multiple ICs and/or discrete components. In various embodiments, the system 3 may be communicatively coupled to other similar systems, or to other electronic devices, via, for example, a communication bus or through dedicated input and/or output ports.

System 3 may include at least one processor 31 configured to execute instructions loaded therein for implementing, for example, the various aspects described in the present application. Processor 31 may include embedded memory, input output interface, and various other circuitries as known in the art. System 3 may include at least one memory 32 (for example a volatile memory device and/or a non-volatile memory device). System 3 may include a storage device 34, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. Storage device 34 may include an internal storage device, an attached storage device, and/or a network accessible storage device, as non-limiting examples.

System 3 may include an encoder/decoder module 33 configured, for example, to process data to provide encoded/decoded chroma (lighting) signal data and/or encoded/decoded video signal or data, and encoder/decoder module 33 may include its own processor and memory. Encoder/decoder module 33 may represent module(s) that may be included in a device to perform the encoding and/or decoding functions. As is known, a device may include one or both of the encoding and decoding modules. Additionally, encoder/decoder module 33 may be implemented as a separate element of system 3 or may be incorporated within processor 31 as a combination of hardware and software as known to those skilled in the art.

Program code to be loaded onto processor 31 or encoder/decoder module 33 to perform the various aspects described in the present application may be stored in storage device 34 and subsequently loaded onto memory 32 for execution by processor 31. In accordance with various embodiments, one or more of processor 31, memory 32, storage device 34, and encoder/decoder module 33 may store one or more of various items during the performance of the processes described in the present application. Such stored items may include, but are not limited to, data representative of chroma/lighting content, data representative of video content, a bitstream, matrices, variables, and intermediate or final results from the processing of equations, formulas, operations, and operational logic.

In several embodiments, the memory inside processor 31 and/or encoder/decoder module 33 may be used to store instructions and to provide working memory for processing that may be performed during data processing, encoding or decoding.

In other embodiments, however, a memory external to the processing device (for example, the processing device may be the processor) may be used for one or more of these functions. The external memory may be memory 32 and/or storage device 34, for example, a dynamic volatile memory and/or a non-volatile flash memory. In at least one embodiment, a fast external dynamic volatile memory such as a RAM may be used as working memory for data processing.

The input to the elements of system 3 may be provided through various input devices as indicated in block 35. Such input devices include, but are not limited to, (i) an RF portion that may receive an RF signal transmitted, for example, over the air by a broadcaster, (ii) a Composite input terminal, (iii) a USB input terminal, (iv) a phone connector (also known as phone jack, audio jack, headphone jack or jack plug) input terminal and/or (v) an HDMI input terminal.

In various embodiments, the input devices of block 35 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments may include one or more elements to perform these functions, for example, frequency selectors, signal selectors, band-limiters, channel selectors, filters, downconverters, demodulators, error correctors, and de-multiplexers. The RF portion may include a tuner that performs various of these functions, including, for example, down-converting the received signal to a lower frequency (for example, an intermediate frequency or a near-baseband frequency) or to baseband.

Various embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various embodiments, the RF portion may include an antenna.

Additionally, the USB and/or HDMI terminals may include respective interface processors for connecting system 3 to other electronic devices across USB and/or HDMI connections. It is to be understood that various aspects of input processing, for example, analog to digital conversion, time domain to frequency domain conversion, down sampling, band pass or low pass filtering, Reed-Solomon error correction, may be implemented, for example, within a separate input processing IC or within processor 31 as necessary. Similarly, aspects of USB or HDMI interface processing may be implemented within separate interface ICs or within processor 31 as necessary. The processed stream may be provided to various processing elements, including, for example, processor 31, and encoder/decoder module 33 operating in combination with the memory and storage elements to process the data stream as necessary for presentation on an output device.

Various elements of system 3 may be provided within an integrated housing. Within the integrated housing, the various elements may be interconnected and transmit data therebetween using suitable connection arrangement, for example, an internal bus as known in the art, including the I2C bus, wiring, and printed circuit boards.

System 3 may include communication interface 36 that enables communication with other devices via communication channel 360. Communication interface 36 may include, but is not limited to, a transceiver configured to transmit and to receive data over communication channel 360. Communication interface 36 may include, but is not limited to, a modem or network card and communication channel 360 may be implemented, for example, within a wired and/or a wireless medium.

Data may be streamed to system 3, in various embodiments, using a Wi-Fi network such as IEEE 802.11. The Wi-Fi signal of these embodiments may be received over communication channel 360 and communications interface 36 which are adapted for Wi-Fi communications. Communication channel 360 of these embodiments may be typically connected to an access point or router that provides access to outside networks including the Internet for allowing streaming applications and other over-the-top communications.

Other embodiments may provide streamed data to system 3 using a set-top box or a computer that delivers the data over the HDMI connection of block 35.

Still other embodiments may provide streamed data to system 3 using the RF connection of block 35.

The streamed data may be used as a way for signaling information used by system 3. The signaling information may comprise the data encoded in a container such as a binary stream for example.

It is to be appreciated that signaling may be accomplished in a variety of ways. For example, one or more syntax elements, flags, and so forth may be used to signal information to a corresponding data processing device in various embodiments.

System 3 may provide an output signal to various output devices, including a display 370, lighting devices or light sources 380, and other peripheral devices 390 like haptic devices/actuators.

In various embodiments, control signals may be communicated between system 3 and display 370, light-emitting devices or light sources 380, or other peripheral devices 390 using signaling such as AV.Link (Audio/Video Link), CEC (Consumer Electronics Control), Audio protocols, USB (Universal Serial Bus), HID (Human Interface Design) for USB, HIF UHP (Haptics Industry Forum - Universal Haptic Protocol) or other communications protocols that enable device-to-device control with or without user intervention.

The output devices may be communicatively coupled to system 3 via dedicated connections through respective interfaces 37, 38, and 39.

Alternatively, the output devices may be connected to system 3 using communications channel 360 via communication interface 36. Display 370, lighting devices or light sources 380 and/or peripheral devices 390 such as haptic device(s) (actuators) may be integrated in a single unit with the other components of system 3 in an electronic device such as, for example, a television.

In various embodiments, display interface 37 may include a display driver, such as, for example, a timing controller (T Con) chip.

Display 370, lighting devices or light sources 380 and/or peripheral devices 390 such as haptic device(s) (actuators) may alternatively be separate from one or more of the other components. In various embodiments in which display 370, lighting devices or light sources 380 and/or peripheral devices 390 such as haptic device(s) (actuators) may be external components, the output signal may be provided via dedicated output connections, including, for example, HDMI ports, USB ports, or COMP outputs.

In **Figure 1,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video and/or haptic and/or chroma encoders, video and/or haptic and/or chroma decoders, haptic engine, chroma engine, post-processors processing output from a video decoder, pre-processors providing input to a video encoder, web servers, set-top boxes, wireless connected wearable haptic devices, e.g., Bluetooth® connected wearable haptic devices, game controller, mouse, mousepad, keyboard, palm rest, chairs, desk, XR headset, headphones, bracelet, head and/or lumbar support device or chair, any light source, and any other device for processing haptic data or signals representative of one or more haptic feedback or effect and/or for processing lighting/chroma data or signals representative of one or more lighting mode or effect, or other communication devices. As should be clear, the equipment may be mobile.

Computer software may be implemented by processor 31 or by hardware, or by a combination of hardware and software. As a non-limiting example, the embodiments may be also implemented by one or more integrated circuits. Memory 32 may be of any type appropriate to the technical environment and may be implemented using any appropriate data storage technology, such as optical memory devices, magnetic memory devices, semiconductor-based memory devices, fixed memory, and removable memory, as non-limiting examples. Processor 31 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment / example / implementation" or "in an exemplary embodiment / example / implementation", as well as other variations thereof, is frequently used to convey that a particular feature, structure, or characteristic (described in connection with the exemplary embodiment / example / implementation) may be included in at least one exemplary embodiment / example / implementation. Thus, the appearances of the expression "in accordance with an exemplary embodiment / example / implementation" or "in an exemplary embodiment / example / implementation" in various places in the specification are not necessarily all referring to the same exemplary embodiment / example / implementation, nor are separate or alternative exemplary embodiment / examples / implementation necessarily mutually exclusive of other exemplary embodiments / examples / implementation.

Reference numerals appearing in the claims are by way of illustration only and shall have no limiting effect on the scope of the claims. Although not explicitly described, the present embodiments / examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Additionally, this application may refer to "obtaining" various pieces of information. Obtaining the information may include one or more of, for example, receiving the information, determining the information, estimating the information, calculating the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Furthermore, "receiving" is typically involved, in one way or another, during operations such as, for example, storing the information, processing the information, transmitting the information, moving the information, copying the information, erasing the information, calculating the information, determining the information, or estimating the information.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of generating haptic data representative of a haptic effect, the method comprising:

   - receiving (21) source data representative of each source content of a set of source contents (101, 102, 103) comprising a first sub-set of one or more source contents (101) of audio type and a second sub-set of one or more source contents (102, 103) of haptic type ;
   - selecting (22) at least a source content in said set of source contents (101, 102, 103) based on a set of selection parameters (121) comprising at least a selection parameter;
   - generating (23) said haptic data according to the source data representative of said at least a selected source content.

2. The method according to claim 1, wherein only at least a source content of the audio type or only at least a source content of the haptic type is selected.

3. The method according to claim 1 or 2, wherein a single source content is selected in said set of source contents (101, 102, 103) based on said set of selection parameters.

4. The method according to claim 3, wherein one selection parameter of said set of selection parameters (121) is associated with each source content of said set of source contents (101, 102, 103), the selection parameter associated with the single selected source content being equal to 1, the other selection parameters of said set of selection parameters being each equal to 0.

5. The method according to claim 1, wherein a plurality of source contents is selected, said haptic data being generated by mixing the source data representative of said plurality of selected source contents.

6. The method according to claim 5, wherein said mixing comprises applying a determined weighting factor to the source data representative of each selected source content of said plurality of selected source contents, the determined weighting factors being according to the set of selection parameters.

7. The method according to any one of claims 1 to 6, wherein values assigned to the selection parameters of said set of selection parameters (121) are adjustable via a user interface.

8. The method according to any one of claims 1 to 6, wherein said set of selection parameters (121) is according to a multidimensional content (104) representative of scenes to be rendered on a display device.

9. The method according to claim 8, wherein said multidimensional content (104) corresponds to a video game content.

10. The method according to claim 8 or 9, wherein said set of selection parameters (121) is selected in a list of sets of selection parameters, each set of selection parameters of said list of sets of selection parameters being mapped to a different multidimensional content.

11. The method according to any one of claims 1 to 10, wherein the source data of each source content of the second subset of one or more source contents (102, 103) of haptic type comprises haptic effect data descriptive of at least a determined haptic effect and body mapping data descriptive of one or more body parts of a body model targeted by said at least a determined haptic effect.

12. An apparatus of generating haptic data representative of a haptic effect, wherein said apparatus comprising a memory associated with at least a processor configured to implement the method according to any one of claims 1 to 11.

13. A non-transitory processor readable medium having stored therein instructions for causing a processor to perform at least the steps of the method according to one of claims 1 to 11.

14. A computer program product comprising instructions of program code for executing the method according to any one of claims 1 to 11, when said program is executed on a computer.

**Fig. 1**

**Fig. 2**

**Fig. 3**

Europäisches
Patentamt

European
Patent Office

Office européen
des brevets

# EUROPEAN SEARCH REPORT

**Application Number**

EP 24 22 3041

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/215975 A1 (D BOX TECH INC [CA]) 16 November 2023 (2023-11-16) * paragraphs [0035], [0055], [0059], [0066], [0067], [0072]; figure 5 * | 1-14 | INV. G06F3/01 A63F13/25 A63F13/285 |
| A | US 2015/070260 A1 (SABOUNE JAMAL [CA] ET AL) 12 March 2015 (2015-03-12) * paragraph [0062] * | 3,4,6 | |
| A | WO 2023/099133 A1 (INTERDIGITAL CE PATENT HOLDINGS SAS [FR]) 8 June 2023 (2023-06-08) * paragraph [0006] * | 11 | |

**TECHNICAL FIELDS SEARCHED (IPC)**

G06F

The present search report has been drawn up for all claims

| Place of search | Date of completion of the search | Examiner |
|---|---|---|
| The Hague | 17 April 2025 | Ghiette, Vincent |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 3041

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2025

| Patent document cited in search report | Publication date | Patent family member(s) | | Publication date |
|---|---|---|---|---|
| WO 2023215975 A1 | 16-11-2023 | EP | 4522290 A1 | 19-03-2025 |
| | | WO | 2023215975 A1 | 16-11-2023 |
| US 2015070260 A1 | 12-03-2015 | CN | 104423707 A | 18-03-2015 |
| | | CN | 110244850 A | 17-09-2019 |
| | | EP | 2846218 A1 | 11-03-2015 |
| | | EP | 3567454 A1 | 13-11-2019 |
| | | JP | 6567809 B2 | 28-08-2019 |
| | | JP | 2015053037 A | 19-03-2015 |
| | | JP | 2019145171 A | 29-08-2019 |
| | | KR | 20150028732 A | 16-03-2015 |
| | | US | 2015070260 A1 | 12-03-2015 |
| | | US | 2018210552 A1 | 26-07-2018 |
| WO 2023099133 A1 | 08-06-2023 | CA | 3239496 A1 | 08-06-2023 |
| | | EP | 4441586 A1 | 09-10-2024 |
| | | JP | 2024544053 A | 27-11-2024 |
| | | KR | 20240110052 A | 12-07-2024 |
| | | TW | 202328873 A | 16-07-2023 |
| | | US | 2025044871 A1 | 06-02-2025 |
| | | WO | 2023099133 A1 | 08-06-2023 |

EPO FORM P0459

For more details about this annex : see Official Journal of the European Patent Office, No. 12/82